# DEMANDE DE BREVET EUROPEEN

(11) **EP 1 659 265 A1**
(43) Date de publication de la demande: **24.05.2006**
(21) Numéro de dépôt: 05292249.9
(22) Date de dépôt: 25.10.2005
(51) Int. Cl.: F01D 5/18, F01D 5/14, F01D 9/06

(54) **Secteur de distributeur de turbine alimenté en air de refroidissement**

(30) Priorité: 29.10.2004 FR 0411575
(71) Demandeur: SNECMA, 75015 Paris (FR)
(72) Inventeur: Bermond, Sabine, 75003 Paris (FR); Dervaux, Alexandre, 75014 Paris (FR); Guimbard, Jean-Michel, 77930 Cély en Bière (FR); Loro, Gaël, 77380 Combs la Ville (FR)
(74) Mandataire: Barbin le Bourhis, Joel

(57) **Abrégé**

L'invention concerne un secteur (110) du distributeur du premier étage d'une turbine basse pression de turboréacteur. Un tel secteur comprend un segment de plate-forme extérieure (104) et un segment de plate-forme intérieure (102) entre lesquels s'étendent plusieurs pales creuses (106), destinées à être alimentées en air de refroidissement, un capot (132) recouvrant une partie de fond (138) du segment de plate-forme extérieure (104) de manière à définir avec cette partie de fond une chambre (140) qui communique avec l'intérieur desdites pales (106) par des ouvertures de communication (130), des entrées d'air (137) étant ménagées dans ledit capot (132) pour permettre l'alimentation de ladite chambre (140) en air de refroidissement.

## Description

L'invention concerne un secteur de distributeur de turbine et une turbomachine équipée d'une turbine dont le distributeur résulte de l'assemblage de plusieurs secteurs de ce type. L'invention peut concerner tout type de turbine destinée à équiper tout type de turbomachine (aéronavale ou au sol). Toutefois, l'invention concerne principalement les turbines à gaz et plus particulièrement les turbines équipant les turboréacteurs d'avions.

Un turboréacteur comprend généralement dans le sens d'écoulement du flux d'air qui le traverse, un ou deux compresseurs, une chambre de combustion et une ou deux turbines. On distingue les turboréacteurs mono corps, comprenant un compresseur et une turbine, des turboréacteurs double corps comprenant deux compresseurs, dénommés compresseur basse pression et compresseur haute pression, et deux turbines dénommées également turbine basse pression et turbine haute pression. Il existe également des turboréacteurs triple corps qui comprennent trois turbines : une turbine basse pression, une turbine haute pression et une turbine dite intermédiaire.

De même, on distingue les turboréacteurs mono flux et double flux. Ces derniers, au lieu d'être traversés par un unique flux d'air, sont traversés par un flux dit primaire traversant les organes de la turbine et un flux dit secondaire circulant entre le carter desdits organes et le carénage du turboréacteur.

Une turbine de turboréacteur comporte des éléments fixes (stator) et des éléments mobiles (rotor). Les éléments mobiles sont des roues mobiles porteuses de pales intercalées entre des grilles de pales fixes, également appelées distributeur. Le couple distributeur/roue mobile constitue un étage de turbine. Pour faciliter le montage de la turbine, les distributeurs sont obtenus par assemblage d'au moins deux secteurs de distributeur.

Compte tenu de la température des gaz traversants la turbine, les pales de certains distributeurs sont creuses de manière à pouvoir être refroidies. C'est généralement le cas dans les turboréacteurs double corps, des pales du premier distributeur de la turbine dans le sens d'écoulement des gaz, ou distributeur du premier étage.

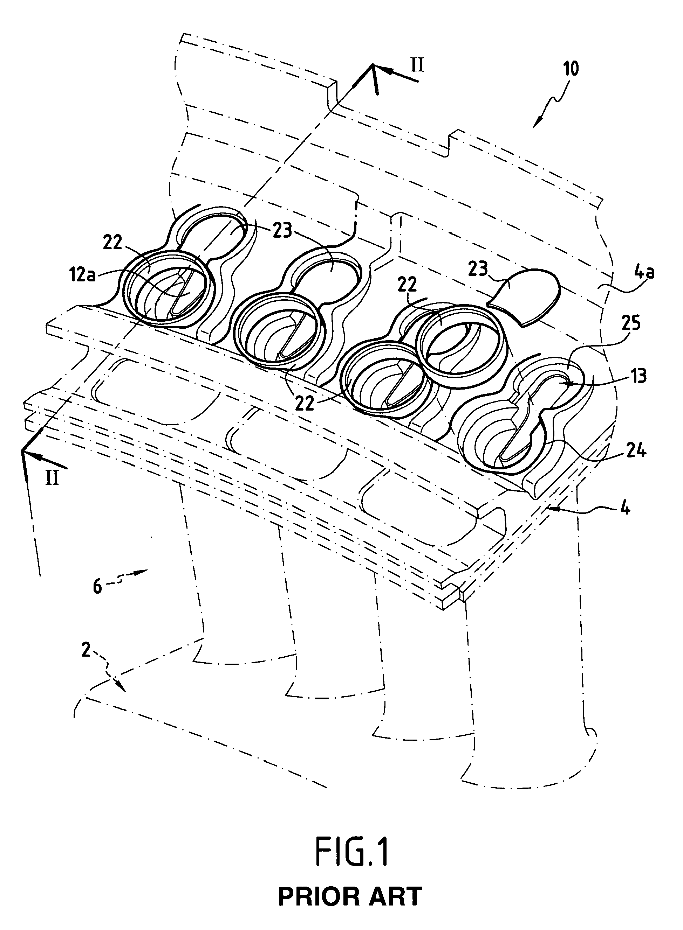

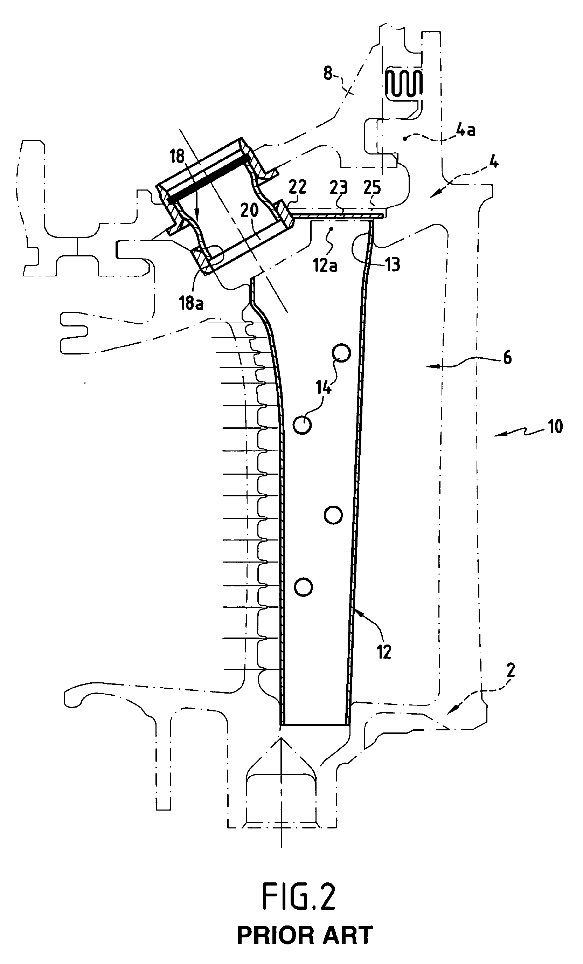

La figure 1 est une vue en perspective d'un exemple de secteur 10 de distributeur de turbine de type connu et la figure 2 est une coupe radiale selon le plan II - II du secteur 10 de la figure 1. Ce secteur 10 comprend un segment 2 d'anneau intérieur et un segment 4 d'anneau extérieur, entre lesquels s'étendent quatre pales 6 destinées à orienter le flux d'air dans une direction favorable à l'entraînement de la roue mobile adjacente (non représentée). Pour former un distributeur, on assemble entre eux vingt-quatre secteurs de ce type. Une fois assemblés, les segments 2 forment un anneau appelé plate-forme intérieure du distributeur, et les segments 4 forment un anneau appelé plate-forme extérieure du distributeur (on notera que lesdites plates-formes ne sont donc pas plates mais annulaires).

Chaque segment 4 de la plate-forme extérieure du distributeur présente des rebords latéraux 4a qui permettent de fixer le distributeur sur le carter 8. Ces rebords 4a sont plus ou moins élevés et leurs formes sont travaillées de manière à coopérer avec des formes complémentaires réalisées sur le carter 8 du turboréacteur.

Les pales 6 sont creuses de manière à pouvoir être traversées par de l'air de refroidissement. De plus, un chemise 12 perforée, réalisée par exemple à partir d'une feuille métallique, est située à l'intérieur de chaque pale pour améliorer son refroidissement. Lors de sa mise en place, cette chemise est glissée à l'intérieur d'une ouverture 13 ménagée dans l'anneau extérieur 4. Chaque chemise 12 est maintenue en place par brasage de son col 12a sur les bords de l'ouverture 13.

L'air de refroidissement pénètre à l'intérieur des pales 6 par l'ouverture 13, passe par les chemises 12 et ressort par des perforations 14 pratiquées dans les chemises 12 de manière à refroidir les parois internes des pales 6 par impact. L'air s'échappe ensuite par des perforations (non représentées) pratiquées dans la pale 6 et rejoint ainsi le flux d'air primaire traversant la turbine.

L'air de refroidissement, généralement prélevé dans le flux primaire du turboréacteur au niveau du compresseur haute pression, est amené jusqu'à chaque pale par l'intermédiaire d'un conduit 18. Ce conduit 18 sert à canaliser le flux d'air de refroidissement vers la pale 6 et à éviter ainsi des fuites d'air parasites, entre le carter 8 et la plate-forme extérieure du distributeur.

Or, comme la section de l'ouverture 13 est supérieure à celle du conduit 18, on doit obturer une partie de l'ouverture 13 et créer une entrée d'air 20 dont la géométrie correspondre parfaitement à celle de l'extrémité du conduit 18. On notera ici que la section du conduit 18 doit être suffisamment faible pour que le débit de l'air circulant à l'intérieur de ce conduit soit suffisamment élevé.

Ainsi, pour chaque ouverture 13, on soude sur le segment 4 de plate-forme extérieure, deux éléments : une douille 22 et une plaquette 23, la douille 22 formant l'entrée d'air 20 et la plaquette 23 obturant une partie de l'ouverture 13. Ces éléments 22 et 23 sont soudés sur le segment 4 après que les chemises 12 aient été mises en place. Pour un secteur 10 de distributeur comprenant quatre pales 6, il faut donc souder huit éléments 22, 23, ce qui rend le montage long et complexe.

D'autre part, pour faciliter le positionnement de la douille 22 et de la plaquette 23, la surface du segment 4 présente des reliefs. Ainsi, une cheminée 24 est formée à la surface du segment d'anneau 4 pour recevoir la douille 22 tandis qu'une cavité 25 est ménagée pour recevoir la plaquette 23. Or, ces reliefs 24, 25 sont réalisés en fonderie et sont obtenus suite à un usinage complexe, long et coûteux. La présence des reliefs 24, 25 augmente donc le coût et le poids du secteur 10 et rigidifient le segment de plate-forme extérieure, de sorte que ce segment 4 ne présente pas la souplesse nécessaire à l'absorption des contraintes thermomécaniques auxquelles il est soumis. On notera que les opérations de soudage des éléments 22 et 23 rigidifient également le segment 4.

L'invention a pour but de résoudre les problèmes précités en proposant un secteur de distributeur de turbine de structure simple, qui soit léger et facile à monter.

Pour atteindre ce but, l'invention a pour objet un secteur de distributeur de turbine comprenant un segment de plate-forme extérieure et un segment de plate-forme intérieure entre lesquels s'étendent plusieurs pales creuses, destinées à être alimentées en air de refroidissement, caractérisé en ce qu'un capot recouvre une partie de fond du segment de plate-forme extérieure de manière à définir avec cette partie de fond une chambre d'entrée d'air commune auxdites pales, qui communique avec l'intérieur desdites pales par des ouvertures de communication, des entrées d'air étant ménagées dans ledit capot pour permettre l'alimentation de ladite chambre en air de refroidissement. L'air de refroidissement transite ainsi par ladite chambre d'entrée d'air commune, avant d'alimenter l'intérieur des pales.

La structure et le montage de ce distributeur sont simplifiés car on ne monte plus qu'un unique élément sur le segment de plate-forme extérieure : le capot. En outre, une chambre commune à plusieurs pales, s'étendant le long de ce segment, est créée sous le capot.

De plus, la surface de ladite partie de fond n'a pas à présenter de relief complexe pour recevoir le capot. Au contraire, avantageusement, cette partie de fond est sensiblement plate (elle présente toutefois nécessairement la courbure du segment) et lesdites ouvertures de communication affleurent au fond de cette partie.

La partie de fond est donc plus simple à façonner et plus légère que dans l'art antérieur. Par ailleurs, le capot est également facile à façonner et peut être réalisé à partir d'éléments légers comme des feuilles métalliques. Il en résulte un gain de masse important et une simplification de la fabrication pour l'ensemble du segment de distributeur.

Ensuite, le capot est distant de la partie de fond du segment de plate-forme extérieure et cette partie étant dépourvue de relief particulier, elle présente une bonne aptitude à se déformer. Cette aptitude est d'autant meilleure que le fond de la partie de fond est plat.

Enfin, la chambre créée entre le capot et la partie de fond, destinée à être remplie d'air de refroidissement va permettre de refroidir, par conduction de chaleur, l'espace environnant cette chambre.

L'invention et ses avantages seront mieux compris à la lecture de la description détaillée qui suit, d'un mode de réalisation de l'invention représenté à titre d'exemple non limitatif. La description se réfère aux dessins annexés, sur lesquels :
- la figure 1 est une vue en perspective, d'un secteur de distributeur de turbine de type connu ;
- la figure 2 est une coupe radiale, selon le plan II - II du de la figure 1, après qu'il ait été assemblé;
- la figure 3a est une vue éclatée, en perspective, d'un secteur de distributeur de turbine selon l'invention ;
- la figure 3b est une vue en perspective, du secteur de distributeur de turbine de la figure 3a, après qu'il ait été assemblé.
- la figure 4 est une vue en coupe radiale selon le plan IV-IV du secteur représenté figure 3b.

Le secteur de distributeur selon l'invention, désigné par la référence générale 110, est destiné à être assemblé avec d'autres secteurs du même type pour former un distributeur de turbine comme un distributeur du premier étage d'une turbine basse pression d'un turboréacteur d'avion double corps double flux. Il pourrait toutefois s'agir d'un distributeur situé à un autre étage de la turbine, d'un distributeur de turbine haute pression ou encore d'un distributeur de turbine intermédiaire (dans le cas d'un turboréacteur triple corps).

De même, on notera que l'invention ne se limite pas aux secteurs de distributeurs équipés de chemises.

Le secteur 110 comprenant certains éléments analogues à ceux du secteur 10 de type connu, précédemment décrit, ces éléments analogues sont affectés des mêmes références augmentées de 100.

Ainsi, le secteur 110 comprend un segment de plate-forme extérieure 104 et un segment de plate-forme intérieure 102 entre lesquels s'étendent quatre pales creuses 106. Une chemise 112 se situe à l'intérieur de chaque pale 106. La section de la chemise 112 s'élargit de l'intérieur vers l'extérieur de la turbine (sur la figure, de bas en haut) et se termine à son extrémité extérieure par un col évasé 112a définissant une entrée d'air de refroidissement. Lors de l'assemblage du secteur 110, cette chemise 112 est glissée à l'intérieur d'une ouverture 130 ménagée dans le segment d'anneau 104, et son col 112a est fixé, par exemple, par brasage aux parois et/ou aux bord de l'ouverture 130.

Avantageusement, la forme et les dimensions de chacune desdites ouvertures de communication 130 correspondent à celles du col 112a de chacune des chemises 112. Ainsi, il est facile de mettre en place chaque chemise 112 à l'intérieur de chaque pale 106 et de fixer le col 112a de chaque chemise 112 sur l'ouverture 130. Ceci simplifie le montage du secteur 110.

Le secteur 110 comprend en outre un capot 132 formé d'une plaque 134 plane ou pliée (comme représenté sur les figures). Sur cette plaque 134, ont été ménagés un certain nombre d'orifices à l'intérieur desquels sont montées des douilles 136. Les douilles 136 délimitent des entrées d'air 137 ménagées dans le capot 132, destinées à être traversées par de l'air de refroidissement.

Le capot 132, plus précisément les bords périphériques de la plaque 136, est en appui sur des épaulements 104b formés dans les rebords latéraux 104a du segment 104, au dessus de la partie de fond 138. Ces rebords 104a entourent le capot 132 sur tous ses côtés et définissent avec la partie de fond 138 et le capot 132 la chambre 140.

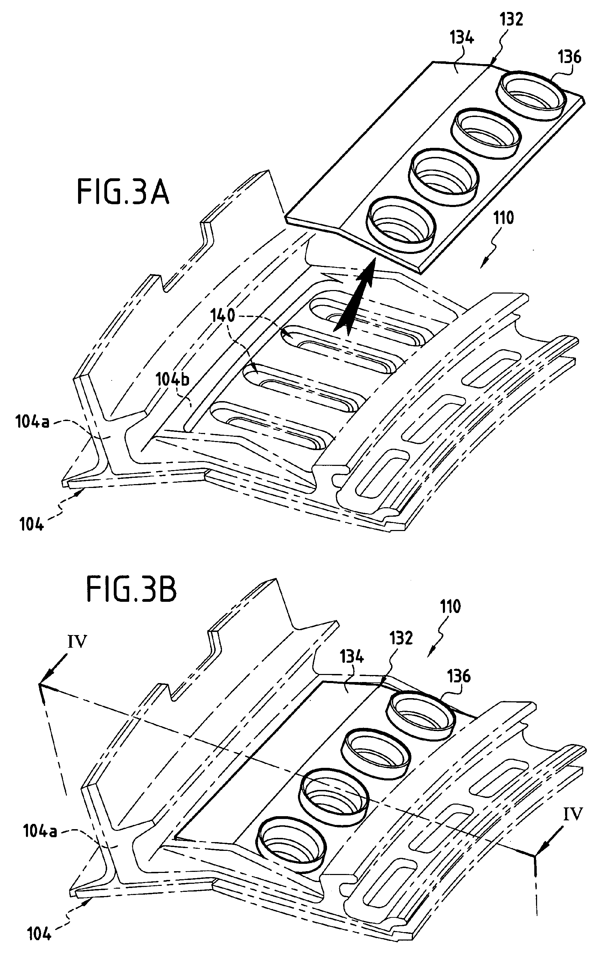

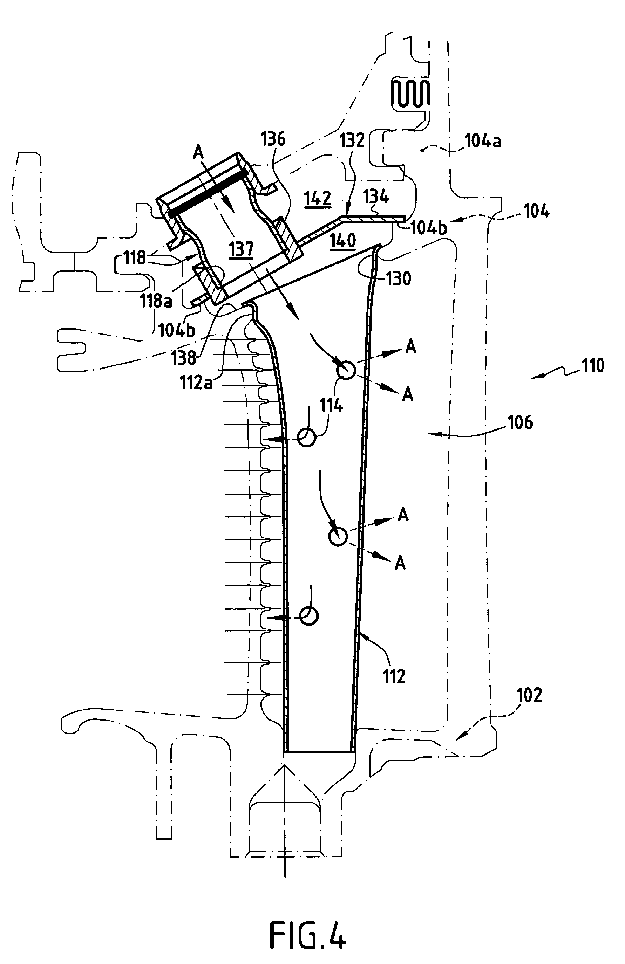

On désigne par partie de fond 138 la partie du segment 104 la plus en retrait radialement et qui se situe entre les rebords latéraux 104a du segment 104. Les ouvertures 130 des pales 106 débouchent au niveau de la partie 138 et, cette partie ne présentant sensiblement pas de relief (elle présente tout de même une légère courbure qui est celle de la plate-forme extérieure), ces ouvertures 130 affleurent au fond de la partie 138 comme représenté sur les figures 3a et 4.

La chambre 140 communique avec l'intérieur des pales 106 via les ouvertures de communication 130. La chambre 140 est par ailleurs alimentée en air de refroidissement par les entrées 137.

Pour amener l'air de refroidissement jusqu'aux entrées 137, on utilise des conduits de liaison 118 appartenant à des moyens d'alimentation en air de refroidissement plus généraux qui prélèvent de l'air frais dans le flux d'air secondaire traversant le turboréacteur.

Chaque entrée d'air 137 du capot 132 présente une forme et des dimensions correspondant à celles d'une extrémité 118a du conduit 118 de manière à pouvoir être connectées à cette extrémité 118a. Ainsi, dans l'exemple, la forme et les dimensions des douilles 136 sont aptes à recevoir ladite extrémité 118a du conduit et à garantir le maximum d'étanchéité possible dans la connexion formée.

L'air de refroidissement circule à l'intérieur du secteur d'anneau 104 suivant les flèches A. Pour s'assurer de la bonne distribution de l'air à l'intérieur des pales 106, le nombre d'entrées d'air 137 peut être choisi égal à celui des ouvertures de communication 130 et les entrées 137 et ouvertures 130, peuvent être situées sensiblement les unes en face des autres, comme représenté sur la figure 3A.

On peut également disposer les entrées d'air 137 entre les ouvertures de communication 130 (en quinconce avec elles), ce qui garantit une bonne répartition de l'air dans chaque pale 106 et permet de réduire le nombre d'entrées 137 d'une unité par rapport au nombre d'ouvertures 130.

Il est donc possible que le nombre d'entrées d'air 137 soit inférieur à celui des ouvertures de communication 130. Ceci permet de simplifier la structure du distributeur et d'en réduire le coût de revient. Ainsi, on peut prévoir une unique entrée d'air 137, commune à toutes les ouvertures de communication 130.

Dans des conditions de fonctionnement du turboréacteur, on constate que l'alimentation de la chambre 140 en air de refroidissement permet de réduire l'échauffement des parties du distributeur entourant cette chambre 140, à savoir bien sûr, la partie de fond 138 et les rebords 104a du segment 104 de plate-forme extérieure, mais également l'espace 142 qui l'entoure et par là même, le carter 8.

## Revendications

1. Secteur de distributeur de turbine comprenant un segment de plate-forme extérieure (104) et un segment de plate-forme intérieure (102) entre lesquels s'étendent plusieurs pales creuses (106), destinées à être alimentées en air de refroidissement, **caractérisé en ce qu'**un capot (132) recouvre une partie de fond (138) du segment de plate-forme extérieure (104) de manière à définir avec cette partie de fond une chambre (140) commune auxdites pales, qui communique avec l'intérieur de ces pales (106) par des ouvertures de communication (130), des entrées d'air (137) étant ménagées dans ledit capot (132) pour permettre l'alimentation de ladite chambre (140) en air de refroidissement.

2. Secteur de distributeur de turbine selon la revendication 1, **caractérisé en ce que** ladite chambre (140) s'étend le long du segment de plate-forme extérieure (104).

3. Secteur de distributeur de turbine selon la revendication 1 ou 2, **caractérisé en ce que** ladite partie de fond (138) du segment de plate-forme extérieure (104) est sensiblement plate.

4. Secteur de distributeur de turbine selon l'une quelconque des revendications 1 à 3, **caractérisé en ce que** lesdites ouvertures de communication (130), affleurent au fond de ladite partie de fond (138).

5. Secteur de distributeur de turbine selon l'une quelconque des revendications 1 à 4, **caractérisé en ce qu'**une chemise perforée (112) avec col (112a) est située à l'intérieur de chaque pale (106), la forme et les dimensions de chacune desdites ouvertures de communication (130) correspondant à celles du col (112a) de chaque chemise (112).

6. Secteur de distributeur de turbine selon l'une quelconque des revendications 1 à 5, **caractérisé en ce que** le nombre d'entrées d'air (137) est égal au nombre d'ouvertures de communication (130) et **en ce que** ces entrées (137) et ouvertures (130) sont situées sensiblement les unes en face des autres.

7. Secteur de distributeur de turbine selon l'une quelconque des revendications 1 à 5, **caractérisé en ce que** le nombre d'entrées d'air (137) est inférieur au nombre d'ouvertures de communication (130).

8. Turbomachine comprenant au moins une turbine équipée d'un distributeur, **caractérisée en ce que** ledit distributeur résulte de l'assemblage de plusieurs secteurs de distributeur (110) selon l'une quelconque des revendications 1 à 7.

9. Turbomachine selon la revendication 8, **caractérisé en ce que** ladite turbomachine est un turboréacteur double corps comprenant une turbine haute pression et une turbine basse pression, ledit distributeur étant le premier distributeur de la turbine basse pression, dans le sens d'écoulement du flux d'air traversant cette turbine.
